Europäisches Patentamt

European Patent Office

Office européen des brevets

(11) Veröffentlichungsnummer : **0 335 069 B1**

# (12) EUROPÄISCHE PATENTSCHRIFT

(45) Veröffentlichungstag der Patentschrift :
01.04.92 Patentblatt 92/14

(51) Int. Cl.⁵ : **E05B 19/04**

(21) Anmeldenummer : **89101058.9**

(22) Anmeldetag : **21.01.89**

(54) **Flachschlüssel für Zylinderschlösser sowie zugehöriges Zylinderschloss.**

(30) Priorität : 31.03.88 AT 861/88

(43) Veröffentlichungstag der Anmeldung :
04.10.89 Patentblatt 89/40

(45) Bekanntmachung des Hinweises auf die
Patenterteilung :
01.04.92 Patentblatt 92/14

(84) Benannte Vertragsstaaten :
CH DE FR GB LI NL

(56) Entgegenhaltungen :
AT-B- 363 337

(73) Patentinhaber : **EVVA - Werk
Spezialerzeugung von Zylinder-und
Sicherheitsschlössern Gesellschaft m.b.H. &
Co. Kommanditgesellschaft
Wienerbergstrasse 59-65
A-1120 Wien (AT)**

(72) Erfinder : **Prunbauer, Kurt
Hainerstrasse 15 C
A-3130 Herzogenburg (AT)**

(74) Vertreter : **Puchberger, Georg, Dipl.-Ing. et al
Patentanwälte Dipl.-Ing. Georg Puchberger
Dipl.-Ing. Rolf Puchberger Dipl.-Ing. Peter
Puchberger Singerstrasse 13 Postfach 55
A-1010 Wien (AT)**

EP 0 335 069 B1

## Beschreibung

Die Erfindung betrifft einen Flachschlüssel für Zylinderschlösser, der an den Seitenflächen Steuernuten, deren Abstand vom Schlüsselrücken variabel ist, und gegebenenfalls weitere Steuerelemente, wie Einschnitte am Schlüsselbart für Stiftzuhaltungen, Steuerflächen am Schlüsselrücken und Längsrippen und -nuten in Schlüsseleinschubrichtung aufweist. Weiters betrifft die Erfindung ein Zylinderschloß für einen derartigen Flachschlüssel, wobei Steuerelemente mit Steuerorganen vorgesehen sind, die im einen Schlüsselkanal ragen und Steuernuten eines in den Schlüsselkanal eingeschobenen Schlüssels abtasten.

Herkömmliche Flachschlüssel haben üblicherweise Längsrippen und Längsnuten an den Seitenflächen, die in Schlüsseleinschubrichtung verlaufen und durch ihr Profil und Anordnung für die Erzeugung von Schließverschiedenheiten herangezogen werden können. Die Zahl der dadurch erzielbaren Schließverschiedenheiten ist allerdings sehr begrenzt. Einerseits ist die Höhe der Seitenflächen und damit der Platz für die Anordnung von Rippen und Nuten begrenzt und andererseits dürfen die Rippen und Nuten bestimmte Querschnittsbemessungen nicht unterschreiten, wenn der Schlüssel in der Praxis verwendbar sein soll.

Durch die AT-B-363 337 ist es bekannt geworden, an den Seitenflächen von Flachschlüsseln geschwungene Steuernuten anzuordnen, in die Sperrelemente des Schlosses eingreifen. Diese Konstruktionen und die damit erzielbaren Variationsmöglichkeiten entsprechen jedoch nicht mehr den heutigen hohen Anforderungen. Bei dieser bekannten Konstruktion handelt es sich um einen Wendeschlüssel, der auf beiden Seiten zwei Nuten verschiedener Tiefe aufweist, von denen jedoch immer nur eine der Nuten vom Schloß abgetastet wird, sodaß die Variationszahl und die Sicherheit gegen unbefugtes Aufsperren sehr beschränkt sind.

Mit der vorliegenden Erfindung soll ein Flachschlüssel für Zylinderschlösser vorgesehen werden, der eine überraschend hohe Zahl an Variationsmöglichkeiten zusätzlich zu den üblichen Variationen über Zuhaltungsstifte und Abtastelemente am Schlüsselrücken bietet. Das erfindungsgemäß Schloß setzt diese hohen Variationsmöglichkeiten in sichere Sperrungen um, wobei neben der großen Zahl an Schließverschiedenheiten eine große Einbruchssicherheit gegeben ist.

Der erfindungsgemäße Flachschlüssel der eingangs beschriebenen Art ist in erster Linie dadurch gekennzeichnet, daß an zumindest einer der beiden Seitenflächen wenigstens drei Steuernuten vorgesehen sind, daß zumindest eine der Steuernuten tiefer ausgebildet ist als die anderen Steuernuten, daß die zwei seichten Steuernuten etwa parallel zueinander verlaufen vorgesehen sind, daß die Steuerstellen der beiden seichten Steuernuten jeweils auf gleichen Steuerstellenlängen, daß die Steuerstellen der tiefen Steuernut zwischen, vor und/oder hinter diesen Steuerstellenlängen angeordnet sind und daß die tiefe Steuernut an wenigstens einer Steuerstelle in eine der seichten Steuernuten schneidet. Das erfindungsgemäße Zylinderschloß der eingangs beschriebenen Art ist dadurch gekennzeichnet, daß an wenigstens einer Seite des Schlüsselkanals etwa parallel zu diesem wenigstens ein Steuerelement mit zwei Steuerorganen vorgesehen ist, die sich mit einer ersten Längserstreckung durch einen Schlitz des Zylinderkernes bis in den Schlüsselkanal erstrecken, um mit den seichten Steuernuten des in den Schlüsselkanal eingeschobenen Schlüssels zusammenzuwirken, und daß auf der gleichen Seite des Schlüsselkanals wenigstens ein weiteres Steuerelement mit einem Steuerogan vorgesehen ist, das sich mit einer zweiten Längserstreckung durch einen anderen Schlitz des Zylinderkerns bis in den Schlüsselkanal erstreckt, um mit der tiefen Steuernut des in den Schlüsselkanal eingeschobenen Schlüssels zusammenzuwirken, wobei die erste Längserstreckung kleiner als die zweite Längsertreckung ist und daß wenigstens ein Sperrelement vorgesehen ist, das bei entsprechender Stellung der Steuerelemente in Freigabeposition für die Verdrehung des Zylinderkernes gegenüber dem Zylindergehäuse bringbar ist.

Weitere Merkmale der Erfindung sind den Patentansprüchen und der nachfolgenden Beschreibung in Verbindung mit den zugehörigen Zeichnungen zu entnehmen.

Im folgenden wird die Erfindung anhand eines Ausführungsbeispieles näher beschrieben. Fig. 1 zeigt die Seitenansicht eines erfindungsgemäßen Schlüssels und die Fig. 2, 3 zeigen jeweils die rechte Hälfte des Schlüssels gemäß den Schnittlinien II-II und III-III. Fig. 4 ist ein radialer Schnitt durch ein Zylinderschloß mit eingestecktem Schlüssel gemäß Schnittlinie IV-IV in Fig. 5. Fig. 5 zeigt die Seitenansicht des Zylinderkerns bei abgenommenem Zylindergehäuse und Fig. 6 zeigt die Aufsicht auf den Zylinderkern in Richtung des Pfeiles VI.

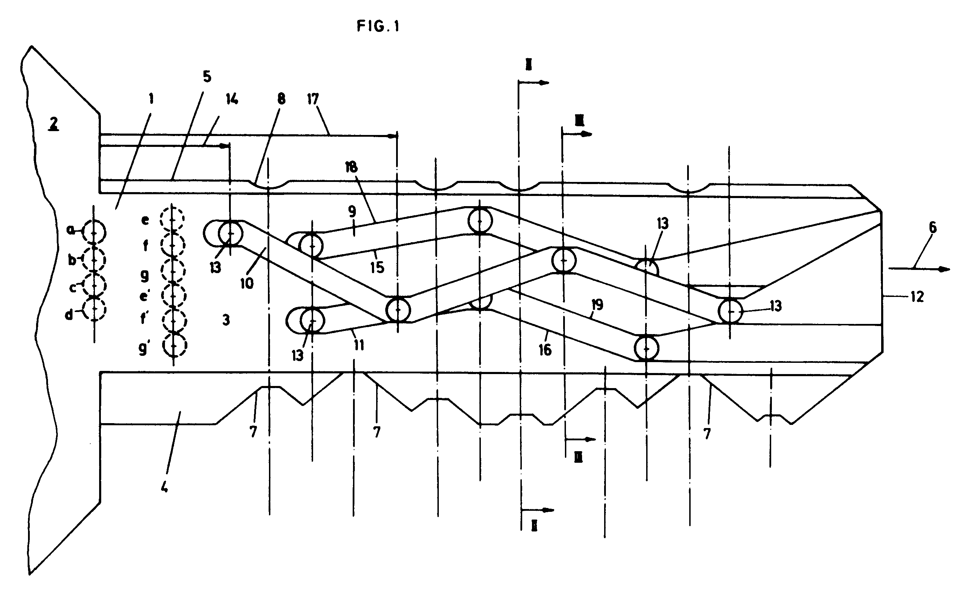

Fig. 1 zeigt den erfindungsgemäßen Flachschlüssel 1 mit der abgebrochen dargestellten Schlüsselreide 2, der rechten Seitenfläche 3, dem Schlüsselbart 4 und dem Schlüsselrücken 5. Die Schlüsseleinschubrichtung in das zugehörige Schloß ist mit 6 bezeichnet.

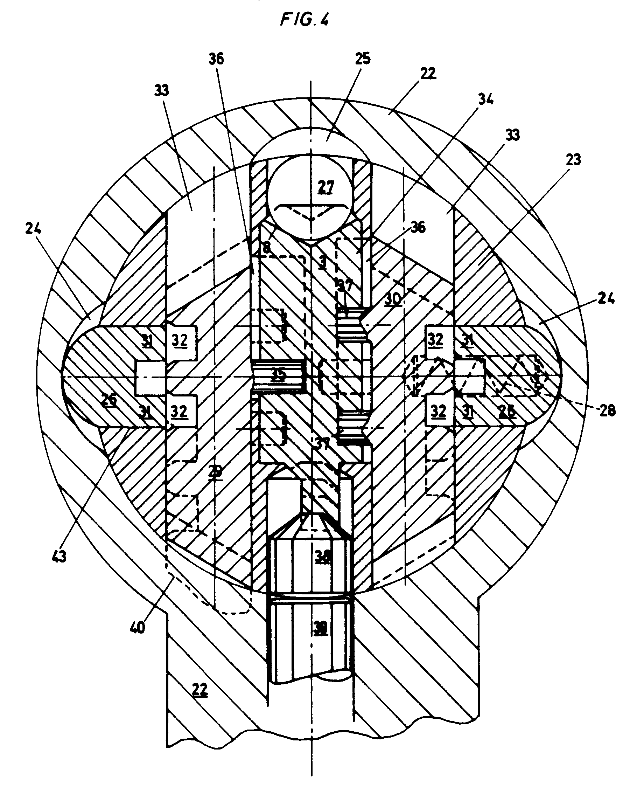

Der Schlüsselbart 4 trägt in üblicher Weise sieben Einschnitte 7 zum Zusammenwirken mit den Stiftzuhaltungen, wie sie in Fig. 4 eingezeichnet sind. Am Schlüsselrücken sind Steuerflächen in Form von Einkerbungen 8 vorgesehen, die mit an sich bekannten Steuerelementen zusammenwirken, wie dies ebenfalls später beschrieben wird.

An der Seitenfläche 3 des Schlüssels 1 sind drei geschwungene Steuernuten 9, 10 und 11 angeordnet.

2

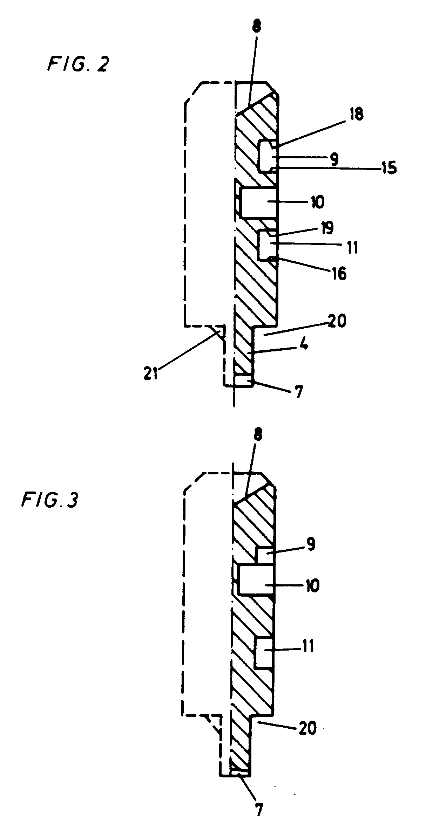

Wie insbesondere den Fig. 2 und 3 zu entnehmen ist, sind die beiden Steuernuten 9 und 11 relativ seicht ausgebildet, während die Steuernut 10 tiefer in das Schlüsselmaterial hineinragt als die beiden anderen Steuernuten 9, 11. Die zwei seichteren Steuernuten 9, 11 verlaufen parallel zueinander und die tiefe Steuernut ist im wesentlichen zwischen den seichten Steuernuten 9, 11 vorgesehen. An einigen Stellen schneidet die tiefe Steuernut 10 eine der beiden seichten Steuernuten 9, 11. Die Breite der tiefen Steuernut 10 ist geringer als der Abstand zwischen den beiden seichten Steuernuten 9 und 11. Zur Schlüsselspitze 12 hin sind die Steuernuten erweitert, um so die später beschriebenen Steuerorgane von Steuerelementen des Zylinderschlosses einzufangen und in die zugehörige Steuernut zu führen.

Dem in Fig. 1 dargestellten Schlüssel sind dieser einen Seitenfläche sieben Steuerelemente so zugeordnet, daß deren Steuerorgane in Form von Bolzen die eingezeichneten Steuerstellungen 13 einnehmen. Wie der Fig. 1 zu entnehmen ist, sind die Steuerstellungen bzw. deren Steuerlängen 14 der tiefen Steuernut 10 und der seichten Steuernuten 9, 11 immer abwechselnd angeordnet. Die im Schloß vorgesehenen Steuerelemente sind somit abwechselnd entweder der tiefen Steuernut 10 oder den seichten Steuernuten 9, 11 zugeordnet. Durch die abwechselnde Anordnung der Steuerelemente ist der Vorteil gegeben, daß die Kurvenform der Steuernuten flacher (mit geringerer Steigung gegenüber der Schlüsseleinschubrichtung) vorgesehen werden kann, wodurch geringerer Reibungswiderstand vorliegt.

In Fig. 1 sind schematisch vier mögliche Steuerhöhen a, b, c, d für jene Steuerhöhen eingezeichnet, die die tiefe Steuernut 10 vorsehen kann. Die beiden seichten Steuernuten 9 und 11 können jeweils drei Steuerhöhen e, f, g bzw. e′, f′, g′ einnehmen, wie dies ebenfalls schematisch eingezeichnet ist und durch die dargestellten Steuernuten, aufgeteilt auf die verschiedenen Steuerlängen auch verwirklicht ist.

In einigen Bereichen ihres Verlaufes werden die seichten Steuernuten 9, 11 von der tiefen Steuernut 10 angeschnitten. Dies bewirkt z.B. bei der Steuernut 9 im Bereich der Schnittlinie III-III (siehe auch Fig. 3), daß die untere Flanke 15 dieser Steuernut fehlt, da sie in den tiefer ausgefrästen Bereich der tiefen Steuernut 10 fällt. Bei diesen Steuerlängen kann jedoch die untere Flanke 16 der Steuernut 11 die Führungsaufgabe für das Steuerelement des zugehörigen Zylinderschlosses übernehmen. Im Bereich der Steuerstelle mit der Steuerlänge 17 übernimmt z.B. die obere Flanke 18 der Steuernut 9 die Führungsaufgabe, da die obere Flanke 19 der Steuernut 11 in diesem Bereich in die tiefere Steuernut 10 fällt. Durch die Anordnung der zwei parallel geführten Steuernuten 9, 11 ist somit sichergestellt, daß immer entsprechende Steuerflanken für die Steuerelemente des Zylinderschlosses vorhanden sind. Die tiefere Steuernut 10 braucht diese Vorkehrung nicht, da diese infolge ihrer Tiefe immer eine entsprechende Steuerflanke zur Verfügung stellt.

Die Fig. 2 und 3 zeigen jeweils die rechte Hälfte des Flachschlüssels nach den Schnittlinien II-II und III-III. Die linken Hälften können entweder spiegelbildlich zur rechten Hälfte ausgebildet sein oder anderen Variationsmöglichkeiten entsprechen. Zusätzliche Variationsmöglichkeiten sind noch dadurch gegeben, daß der Schlüsselbart 4 im Querschnitt abgestuft ist, wodurch Rippen bzw. Nuten 20, 21 gebildet sind, die in Schlüsseleinschubrichtung 6 verlaufen.

Die Fig. 4 zeigt einen Schnitt durch einen erfindungsgemäßen Schlüssel und das zugehörige erfindungsgemäße Schloß. Die rechte Schlüssel-Schloßhälfte in Fig. 4 entspricht dabei einem Schnitt in einer Ebene, in der zwei Steuerorgane in die flachen Nuten eingreifen, wohingegen die links dargestellte Schlüssel-Schloßhälfte dem Schnitt in einer Ebene entspricht, in der das Steuerorgan für die mittlere tiefe Steuernut 10 liegt. Beide Schnittebenen können zusammenfallen.

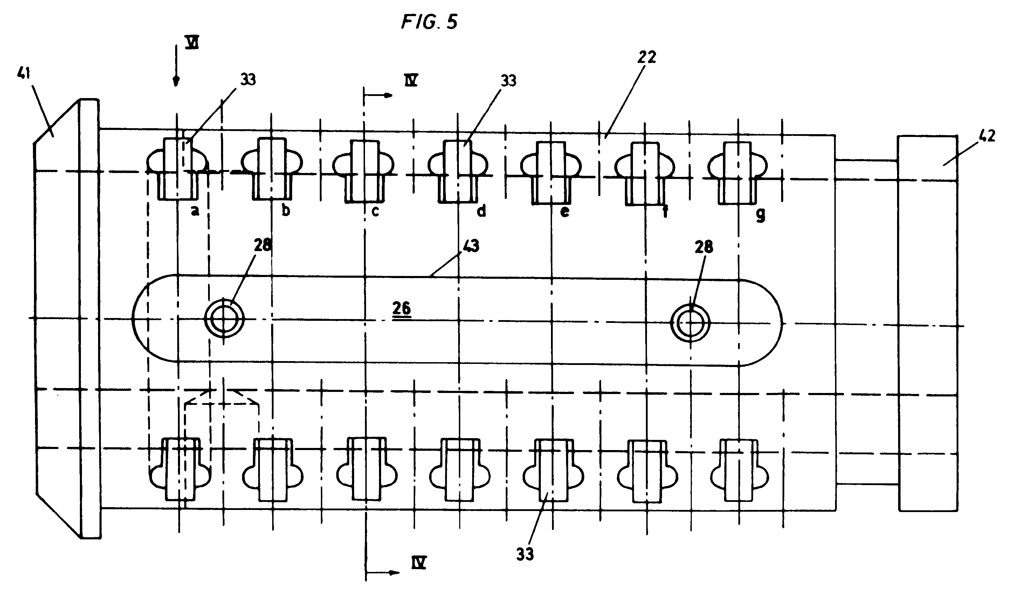

Im Gehäuse 22 liegt in üblicher Weise drehbar der Zylinderkern 23. An der Innenwand des Gehäuses 22 sind in axialer Richtung Rastnuten 24, 25 angeordnet, in die Rastelemente 26, 27 eingreifen können, um so den Zylinderkern gegen Verdrehung zu blockieren. Das Rastelement 27 weist in an sich bekannter Art Kugelform auf und ist in Fig.4 in Freigabestellung eingezeichnet, was bedeutet, daß es der entsprechenden Einkerbung 8 des Schlüssels gegenüberliegt. Die Rastelemente 26 sind Leisten, wie in Fig. 5 zu sehen ist, die durch Druckfedern 28 in die Rastausnehmungen 24 gedrückt werden und bei Verdrehen des Zylinderkerns 23 in den Zylinderkern hinein verschoben werden können, soferne sich die Steuerelemente 29, 30 in entsprechender Stellung befinden, wie sie in Fig. 4 eingezeichnet ist. Dabei liegen Fortsätze 31 der Rastelemente Ausnehmungen 32 der Steuerelemente 29 30 gegenüber, sodaß sie in diese eintreten können. Bei verdrehter Stellung des Zylinderkerns, wenn also die Fortsätze 31 in den Ausnehmungen 32 liegen, sind die Steuerelemente 29, 30 gegen Verschieben blockiert.

Die soeben genannten Steuerelemente 29, 30 sind im Zylinderkern in Ausnehmungen 33 parallel oder annähernd parallel zum Schlüsselkanal 34 verschiebbar gelagert. Das in Fig. 4 links eingezeichnete Steuerelement 29 weist als Steuerorgan einen Bolzen 35 auf, der durch einen Schlitz 36 in den Schlüsselkanal 34 hineinragt. Der Bolzen 35 ist in seiner Länge so dimensioniert, daß er nur in die tiefe Steuernut 10 des Schlüssels 3 paßt und von dieser gesteuert wird. Das rechts eingezeichnete Steuerelement 30 weist als Steuerorgane zwei Bolzen 37 auf, die dimensionsmäßig in die seichten Steuernuten 9 und 11 des Schlüssels passen. Auch diese Bolzen 37 ragen durch einen Schlitz 36 bis in den Schlüsselkanal 34.

Am Schlüsselbart greifen in üblicher Weise die zwei- oder mehrteiligen Zuhaltungsstifte 38, 39 an.

Die Länge der Steuerelemente 29, 30 ist so bemessen, daß sie innerhalb ihrer Ausnehmungen 33 entsprechend der Steuerbewegung durch die Steuernuten 9, 10, 11 frei verschoben werden können, ohne an der Innenwand des Gehäuses 22 anzustoßen. Wie bei Bezugszeichen 40 strichliert angedeutet, können im Gehäuse 22 Ausnehmungen vorgesehen sein, die in unterster (oder auch oberster) Stellung ein Eindringen eines der Enden der Steuerelemente in diese Ausnehmung gestatten, wodurch in Sperrstellung die Verrastung zwischen Zylinderkern und Gehäuse noch verstärkt werden kann.

In Fig. 5 sieht man die Seitenansicht eines Zylinderkerns. Am vorderen Ende trägt er einen Bund 41 und am hinteren Ende 42 die hier nicht näher dargestellten Teile, die mit einer üblichen Kupplung zusammenwirken, über die die Drehbewegung des Zylinderkerns auf das nachfolgende Türschloß übertragen werden können. Das Rastelement 26 ist leistenförmig und ist in radialer Richtung in der Ausnehmung 43 des Zylinderkerns verschiebbar.

Die Ausnehmungen 33 dienen, wie zuvor beschrieben, der Aufnahme der Steuerelemente 29, 30 und sind mit a bis g bezeichnet. In einer bevorzugten Ausführungsform sind die Ausnehmungen a, c, e, g mit Steuerelementen 30 besetzt, die somit jeweils zwei Bolzen 37 für die flachen Steuernuten 9, 11 aufweisen und die Ausnehmungen b, d, f sind mit Steuerelementen 29 für die tiefe Nut 10 besetzt.

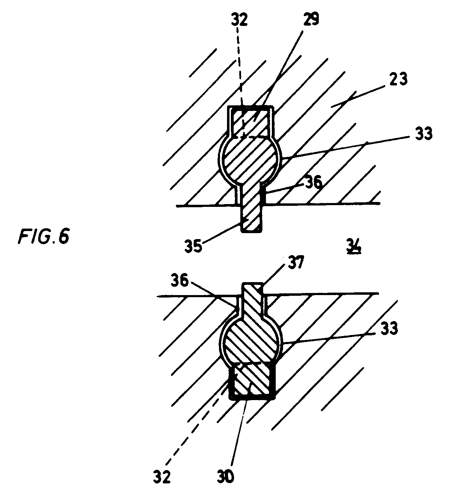

Auf der anderen Seite kann der Zylinderkern 22 die spiegelbildlich gleiche Anordnung an Ausnehmungen 33 aufweisen, wobei beispielsweise je einem Steuerelement 30 ein Steuerelement 29 gegenüberliegt, wie dies in Fig. 6 schematisch dargestellt ist. Die Ausnehmung 33 besteht im wesentlichen aus einer Bohrung, die an einer Seite eine Führungsnut aufweist und auf der anderen Seite in den Schlitz 36 übergeht, durch den der Bolzen 37 (bzw. 35) in den Schlüsselkanal 34 ragt.

Bei Nullstellung des Zylinderkerns und wenn kein Schlüssel in den Schlüsselkanal eingesteckt ist, befinden sich die Steuerelemente 29, 30 in beliebig verschobener Stellung, sodaß bei einem mißbräuchlichen Verdrehen des Zylinderkerns die Rastelemente 26 gegen die zugewandte Außenfläche der Steuerelemente 29, 30 stoßen, da die Rastelemente 31 nicht in die Ausnehmungen 32 einrasten können. Die Rastelemente 26 ragen dabei in die Rastnut 24 und verhindern das Verdrehen des Zylinderkerns.

Beim Einschieben des Schlüssels greifen die Bolzen 35 der verschiedenen Steuerelemente 29 in die zugehörige tiefe Nut 10 des Schlüssels und die Bolzen 37 der verschiedenen Steuerelemente 30 in die beiden seichte n Steuernuten 9, 11 des Schlüssels und werden beim Einschieben des Schlüssels in den Schlüsselkanal entsprechend auf und ab bewegt, bis bei vollständig eingeschobenem Schlüssel die richtige Steuerstellung aller Steuerelemente eingestellt ist. Es liegen dann die Rastelemente 31 den zugehörigen Ausnehmungen 32 gegenüber (siehe Fig. 4), sodaß ein Verdrehen des Zylinderkerns ermöglicht ist. Die Einkerbungen 8 am Schlüsselrücken 5 müssen so angeordnet sein, daß ihnen jeweils das kugelförmige Rastelement 27 gegenüberliegt, wodurch diese beim Verdrehen des Zylinderkerns in den Zylinderkern eintauchen können und somit die Rastnut 25 freigeben. Ein Abziehen des Schlüssels ist nur in Nullstellung des Zylinderkerns möglich, wenn also die Rastelemente 26, 27 den zugehörigen Rastausnehmungen 24, 25 gegenüberliegen.

Die Erfindung ist auf das dargestellte Ausführungsbeispiel nicht beschränkt, sondern kann vielfach variiert werden, z.B. es kann vorteilhaft sein, die tiefe Steuernut nicht zwischen den beiden seichten Steuernuten anzuordnen, sondern oberhalb oder unterhalb der seichten Steuernuten. Wesentlich ist, daß immer eine der seichten Steuernuten die Führungsaufgabe voll übernehmen kann. Weiters können auch zusätzliche Nuten vorgesehen werden, z.B. zwei tiefe Steuernuten. Weiters können die Steuernuten auch durchwegs kurvenförmig sein, wobei somit auch die Verbindung zwischen den einzelnen Steuerstellen kurvenförmig verläuft. Anstelle der leistenförmig dargestellten Rastelemente 26, 27 können diese als mehrteilige Steuerelemente ausgeführt sein.

## Patentansprüche

1. Flachschlüssel für Zylinderschlösser, der an den Seitenflächen (3) Steuernuten (9, 10, 11), deren Abstand vom Schlüsselrücken variabel ist, und gegebenenfalls weitere Steuerelemente, wie Einschnitte am Schlüsselbart für Stiftzuhaltungen, Steuerflächen am Schlüsselrücken und Längsrippen und -nuten in Schlüsseleinschubrichtung aufweist, dadurch gekennzeichnet, daß an zumindest einer der beiden Seitenflächen (3) wenigstens drei Steuernuten (9, 10, 11) vorgesehen sind, daß zumindest eine der Steuernuten (10) tiefer ausgebildet ist als die anderen Steuernuten (9, 11), daß die zwei seichten Steuernuten (9, 11) etwa parallel zueinander verlaufend vorgesehen sind, daß die Steuerstellen (13) der beiden seichten Steuernuten (9, 11) jeweils auf gleichen Steuerstellenlängen (14, 17) und daß die Steuerstellen (13) der tiefen Steuernut (10) zwischen, vor und/oder hinter diesen Steuerstellenlängen (14,17) angeordnet sind und daß die tiefe Steuernut (10) an wenigstens einer Steuerstelle in eine der seichten Steuernuten (9, 11) schneidet.

2. Flachschlüssel nach Anspruch 1, dadurch gekennzeichnet, daß die tiefe Steuernut (10) im wesentlichen zwischen den seichten Steuernuten (9, 11) angeordnet ist.

3. Flachschlüssel nach Anspruch 1 oder 2, dadurch gekennzeichnet, daß die Breite der tiefen Steuernut (10) geringer ist als der Abstand zwischen den beiden seichten Steuernuten (9, 11).

4. Flachschlüssel nach einem der Ansprüche 1 bis 3, dadurch gekennzeichnet, daß die Steuernuten (9, 10, 11) zur Schlüsselspitze (12) hin erweitert sind.

5. Flachschlüssel nach einem der Ansprüche 1 bis 4, dadurch gekennzeichnet, daß die Steuernuten (9, 10, 11) an ihren Steuerstellen (13) etwa in Schlüsseleinschubrichtung (6) verlaufend und zwischen den Steuerstellungen (13) schräg dazu angeordnet sind.

6. Flachschlüssel nach einem der Ansprüche 1 bis 5, dadurch gekennzeichnet, daß die tiefe Steuernut (10) vier mögliche Steuerstellenhöhen (a, b, c, d) und die seichten Steuernuten (9, 11) je drei mögliche Steuerstellenhöhen (e, f, g, e', f', g') aufweisen.

7. Zylinderschloß für Flachschlüssel nach wenigstens einem der Ansprüche 1 bis 7, wobei Steuerelemente (29, 30) mit Steuerorganen (35, 37) vorgesehen sind, die in einen Schlüsselkanal (34) ragen und Steuernuten (9, 10, 11) eines in den Schlüsselkanal (34) eingeschobenen Schlüssel abtasten, dadurch gekennzeichnet, daß an wenigstens einer Seite des Schlüsselkanals (34) etwa parallel zu diesem wenigstens ein Steuerelement (30) mit zwei Steuerorganen (37) vorgesehen ist, die sich mit einer ersten Längserstreckung durch einen Schlitz (36) des Zylinderkernes (23) is in den Schlüsselkanal (34) erstrecken, um mit den seichten Steuernuten (9, 11) des in den Schlüsselkanal (34) eingeschobenen Schlüssels zusammenzuwirken, und daß auf der gleichen Seite des Schlüsselkanals (34) wenigstens ein weiteres Steuerelement (29) mit einem Steuerogan (35) vorgesehen ist, das sich mit einer zweiten Längserstreckung durch einen anderen Schlitz (36) des Zylinderkerns (23) is in den Schlüsselkanal (34) erstreckt, um mit der tiefen Steuernut (10) des in den Schlüsselkanal (34) eingeschobenen Schlüssels zusammenzuwirken, wobei die erste Längserstreckung kleiner als die zweite Längserstreckung ist und daß wenigstens ein Sperrelement (26) vorgesehen ist, das bei entsprechender Stellung der Steuerelemente (29, 30) in Freigabeposition für die Verdrehung des Zylinderkernes (23) gegenüber dem Zylindergehäuse (22) bringbar ist.

## Claims

1. Flat key for cylinder locks, which has guide grooves (9, 10, 11) on the side faces (3), the distance from the key head of which is variable, and, if necessary, other guide elements like recesses on the key bit for pin tumblers, guide faces on the key head and lengthwise ribs and grooves in the key insertion direction, characterised in that on at least one of the two side faces (3), at least three guide grooves (9, 10, 11) are provided, that at least one of the guide grooves (10) is formed deeper than the other guide grooves (9, 11), that the two shallow guide grooves (9, 11) are provided to run approximately parallel to each other, that the guide positions (13) of the two shallow guide grooves (9, 11) are in each case arranged on the same guide position lengths (14, 17) and that the guide positions (13) of the deep guide groove (10) are arranged between, in front of and/or behind these guide position lengths (14, 17) and that the deep guide groove (10) cuts into one of the shallow guide grooves (9, 11) at least at one guide position.

2. Flat key according to Claim 1, characterised in that the deep guide groove (10) is arranged essentially between the shallow guide grooves (9, 11).

3. Flat key according to Claims 1 or 2, characterised in that the width of the deep guide groove (10) is less than the distance between the two shallow guide grooves (9, 11).

4. Flat key according to one of Claims 1 to 3, characterised in that the guide grooves (9, 10, 11) are extended towards the tip of the key (12).

5. Flat key according to one of Claims 1 to 4, characterised in that the guide grooves (9, 10, 11) at their guide positions (13) are arranged to run approximately in the key insertion direction (6) and are arranged obliquely to this between the guide positions (13).

6. Flat key according to one of Claims 1 to 5, characterised in that the deep guide groove (10) has four possible guide position levels (a, b, c, d) and the shallow guide grooves (9, 11) each have three possible guide position levels (e, t, g, e', f', g').

7. Cylinder lock for flat key according to at least one of Claims 1 to 7, whereby guide elements (29, 30) are provided with guide units (35, 37) which project into a key channel (34) and trace guide grooves (9, 10, 11) of a key pushed into the key channel (34), characterised in that, on at least one side of the key channel (34), approximately parallel to the latter, at least one guide element (30) with two guide units (37) is provided, which, with a first lengthwise extension, extend through a slot (36) of the cylinder plug (23) into the key channel (34) in order to interact with the shallow guide grooves (9, 11) of the key pushed into the key channel (34), and that, on the same side of the key channel (34), at least one other guide element (29) is provided with a guide unit (35), which extends with a second lengthwise extension through another slot (36) of the cylinder plug (23) into the key channel (34) in order to interact with the deep guide groove (10) of the key pushed into the key channel (34), the first lengthwise extension being smaller than the second lengthwise extension, and that at least one obstructing element (26) is provided, which can be brought, with a corresponding position of the guide elements (29, 30), into a release position for the rotation of the cylinder plug (23) in relation to the cylinder housing (22).


**Revendications**

1. Clef plate pour serrures cylindriques qui présente, sur ses surfaces latérales (3), des rainures de manoeuvre (9, 10, 11) dont la distance vis-à-vis du dos de la clef est variable, et le cas échéant d'autres éléments de manoeuvre, comme des découpes sur le panneton de la clef pour des goupillons, des surfaces de manoeuvre sur le dos de la clef et des nervures longitudinales et rainures dans la direction d'insertion de la clef, caractérisée en ce que, sur au moins l'une des deux surfaces latérales (3) sont prévues au moins trois rainures de manoeuvre (9, 10, 11), en ce qu'au moins l'une des rainures (10) est plus profonde que les autres rainures (9, 11), en ce que les deux rainures peu profondes (9, 11) sont prévues à peu près parallèles l'une à l'autre, en ce que les positions de manoeuvre (13) des deux rainures peu profondes (9, 11) se trouvent sur des longueurs identiques (14, 17) et en ce que les positions de manoeuvre (13) de la rainure profonde (10) se trouvent entre, avant et/ou derrière ces longueurs des positions de manoeuvre (14, 17) et en ce que la rainure profonde (10) coupe en au moins une position de manoeuvre l'une des rainures peu profondes (9, 11).

2. Clef plate selon la revendication 1, caractérisée en ce que la rainure profonde (10) est agencée essentiellement entre les rainures peu profondes (9, 11).

3. Clef plate selon la revendication 1 ou 2, caractérisée en ce que la largeur de la rainure profonde (10) est plus petite que la distance entre les deux rainures peu profondes (9, 11).

4. Clef plate selon l'une quelconque des revendications 1 à 3, caractérisée en ce que les rainures (9, 10, 11) s'élargissent en direction de la pointe (12) de la clef.

5. Clef plate selon l'une quelconque des revendications 1 à 4, caractérisée en ce que les rainures (9, 10, 11) passent à leurs positions de manoeuvre (13) dans le sens d'insertion de la clef (6) et entre les positions de manoeuvre (13), elles sont agencées de manière oblique.

6. Clef plate selon l'une quelconque des revendications 1 à 5, caractérisée en ce que la rainure profonde (10) présente quatre hauteurs possibles de position de manoeuvre (a, b, c, d) et en ce que les rainures peu profondes (9, 11) possèdent chacune trois hauteurs possibles de position de manoeuvre (e, f, g, e′, f′, g′).

7. Serrure cylindrique pour clef plate selon l'une quelconque des revendications 1 à 7, où des éléments de manoeuvre (29, 30) avec des organes de manoeuvre (35, 37) sont prévus, qui dépassent dans un canal (34) et détectent les rainures (9, 10, 11) d'une clef insérée dans le canal (34), caractérisée en ce qu'au moins d'un côté du canal (34) de la clef, à peu près parallèlement à celui-ci, est prévu au moins un élément de manoeuvre (30) avec deux organes de manoeuvre (37), qui s'étendent sur une première étendue à travers une fente (36) du noyau (23) du cylindre jusque dans le canal (34) de la clef pour coopérer avec les rainures peu profondes (9, 11) de la clef insérée dans le canal (34) et en ce que du même côté du canal (34) est prévu au moins un autre élément de manoeuvre (29) avec un organe de manoeuvre (35) qui s'étend sur une seconde étendue à travers une autre fente (36) du noyau (23) du cylindre jusque dans le canal (34) de la clef pour coopérer avec la rainure profonde (10) de la clef insérée dans le canal (34), la première étendue étant plus petite que la seconde étendue et en ce qu'au moins un élément d'arrêt (26) est prévu qui, pour une position correspondante des éléments (29, 30), peut être mis en position de libération pour la rotation du noyau (23) du cylindre vis-à-vis du corps du cylindre (22).

FIG.1

EP 0 335 069 B1

FIG. 2

FIG. 3

EP 0 335 069 B1

## FIG. 4

9

FIG. 5

EP 0 335 069 B1

FIG.6